# EUROPÄISCHE PATENTSCHRIFT

(11) **EP 2 599 176 B1**
(45) Veröffentlichungstag und Bekanntmachung des Hinweises auf die Patenterteilung: **06.04.2016**
(21) Anmeldenummer: 11738405.7
(22) Anmeldetag: 28.07.2011
(51) Int. Cl.: H02G 3/30

(54) **BEFESTIGUNGSSYSTEM FÜR LEITUNGEN**
ATTACHMENT SYSTEM FOR LINES
SYSTÈME DE FIXATION POUR LIGNES

(30) Priorität: 12.08.2010 US 805681; 29.07.2010 DE 102010032686
(43) Veröffentlichungstag der Anmeldung: 05.06.2013
(73) Patentinhaber: HYDAC Accessories GmbH, 66280 Sulzbach/Saar (DE)
(72) Erfinder: EVEN, Rainer, 66123 Saarbrücken (DE); YAGCI, Burhan, 66280 Sulzbach (DE)
(74) Vertreter: Bartels, Martin Erich Arthur
(86) Internationale Anmeldenummer: PCT/EP2011/003782
(87) Internationale Veröffentlichungsnummer: WO 2012/013347

(56) Entgegenhaltungen:
- EP-A2- 0 681 133
- DE-U1-202006 006 347
- FR-A1- 2 717 246
- US-A- 4 347 998

## Beschreibung

Die Erfindung betrifft ein Befestigungssystem für Leitungen, insbesondere für Kabel bei Windkraftanlagen, umfassend einen an einer Tragstruktur festlegbaren Grundkörper, der an seiner Unterseite ein Bodenteil und mindestens eine zu der dem Bodenteil entgegengesetzten Oberseite hin offene Leitungsdurchführung zur Ausbildung eines jeweiligen Aufnahmeraums für eine oder mehrere Leitungen aufweist, ein Deckteil, das als oberer Abschluss des Grundkörpers mit diesem verbindbar ist und durch welches die mindestens eine Leitungsdurchführung an der Oberseite verschließbar ist, wobei mindestens eine Federanordnung vorgesehen ist, die jeweils eine Federkraft auf eine an mindestens einer Leitung im jeweiligen Aufnahmeraum anliegende Anlagefläche derart aufbringt, dass die eine oder mehrere Leitungen im jeweiligen Aufnahmeraum unter Vorspannung fixierbar sind, wobei die jeweilige Federanordnung am Deckteil und/oder am Bodenteil angeordnet ist.

Um die in Windkraftanlagen erzeugten Energien abzuführen sowie für andere betriebliche Zwecke wie Steuerung, Überwachung und dergleichen, sind Leitungen erforderlich, die an Turmsegmenten befestigt werden müssen. Dabei handelt es sich in erster Linie um Kabel, wobei unterschiedliche Systeme in Frage kommen, je nachdem ob es sich um eine Gleichstrom- oder Wechselstromanlage handelt. So werden bei Wechselstromanlagen die Kabel häufig in Dreier-Bündeln befestigt (entsprechend den Phasen RST), während bei Gleichstromanlagen Einzelkabel verlegt werden. Die Verlegung erfolgt im Regelfall in mehreren Befestigungsetagen. Die Außendurchmessertoleranzen der Kabel führen bei der Kabelverlegung zu Problemen. Bei paralleler Führung von Kabelbündeln kann das zu Verspannungen im Befestigungssystem führen. Bei einer Übereinanderbefestigung führt das dann zum Schiefstand der Systemteile. Um dem entgegenzuwirken, wird beim Stand der Technik mit Ausgleichsscheiben gearbeitet. Dies ist in verschiedener Hinsicht unvorteilhaft, insbesondere weil sich die Montage kompliziert und zeitaufwendig gestaltet.

Ein Befestigungssystem der eingangs genannten Art ist beispielsweise aus EP 0 681 133 A2 bekannt. Das bekannte Befestigungssystem ist rohrschellenartig aufgebaut, wobei Aufnahmeräume für jeweils eine Leitung durch an einem oberen Schellenteil und an einem unteren Schellenteil ausgebildete Halbräume mit halbkreisförmigem Querschnitt festgelegt werden. Beide Schellenteile sind gelenkartig miteinander verbunden und durch ein Rastteil miteinander fest verbindbar.

Die US 4 347 998 A beschreibt eine Befestigungsvorrichtung nach dem Oberbegriff des Anspruchs 1.

Die DE 20 2006 006 347 U1 beschreibt eine Halteeinrichtung für mindestens eine Leitung oder dergleichen, umfassend ein Gehäuse mit einem Grundkörper und einem gegenüber dem Grundkörper bewegbaren Deckel, einen Einsatz zum Einsetzen in das Gehäuse, wobei der Einsatz zumindest eine im Wesentlichen U-förmige Leitungsaufnahme aufweist, in welche die Leitung durch einen Einführschlitz in radialer Richtung einbringbar ist, so dass der Einsatz die Leitung zumindest abschnittsweise umgibt. Der Einsatz weist eine flexible Lasche auf, welche ausgebildet ist, um den Einführschlitz bei geschlossenem Deckel zumindest abschnittsweise zu verschließen.

Die FR 2 717 246 A1 beschreibt eine Befestigungsvorrichtung für rohrartige Elemente, wobei die Befestigungsvorrichtung einteilig aus einem Kunststoffteil mit einem Ober- und Unterteil gebildet ist und die Teile scharnierartig miteinander verbunden sind. Das Unterteil weist zumindest ein trapezförmiges Anlageteil und ein flexibles, in der Art eines abgewinkelten, elastischen Druckteils gebildetes Teil auf, das ein rohrartiges Element zwischen sich und dem Anlageteil kraftschlüssig festlegen kann.

Die EP 0 681 133 A2 beschreibt eine Befestigungsvorrichtung für Kabel und dergleichen, wobei die Vorrichtung ein mit wellenförmigen Aussparungen versehenen Unterteil und ein ebenso mit wellenförmigen Aussparungen versehenes Oberteil aufweist. Die beiden Teile sind in der Lage, Kabel und dergleichen elastisch radial zu umfassen und zu positionieren. Zumindest jeweils das Oberteil und das Unterteil sind einstückig ausgebildet.

Bei den bekannten Befestigungssystemen wird zumindest durch im oberen Schellenteil ausgebildete Hohlräume eine gewisse Anpresskraft auf in der Schelle angeordnete Leitungen ausgeübt, hinsichtlich der Verwendbarkeit für Leitungen unterschiedlicher Querschnittsgrößen und -formen lassen die bekannten Lösungen aber noch Wünsche offen.

Im Hinblick auf diese Problematik stellt sich die Erfindung die Aufgabe, ein Befestigungssystem zur Verfügung zu stellen, das in einfacher und sicherer Weise eine Fixierung von einer oder mehrerer im jeweiligen Aufnahmeraum angeordneten Leitungen auch bei unterschiedlichen Leitungsquerschnitten ermöglicht und des Weiteren sich durch eine besondere Montagefreundlichkeit auszeichnet.

Erfindungsgemäß ist diese Aufgabe durch ein Befestigungssystem gelöst, das die Merkmale des Patentanspruches 1 in seiner Gesamtheit aufweist. Demgemäß besteht eine wesentliche Besonderheit der Erfindung darin, dass die jeweilige Anlagefläche an einem bewegbaren Druckkörper ausgebildet ist, der durch mindestens eine Druckfeder in Richtung des Bodenteils bzw. des Deckteils zum jeweiligen Aufnahmeraum hin vorgespannt ist.

Vorteilhafte Ausgestaltungen des erfindungsgemäßen Befestigungssystems sind Gegenstände der Unteransprüche.

Bei einer bevorzugten Ausführungsform ist innerhalb der betreffenden Leitungsdurchführung des Grundkörpers ein Aufnahmeelement vorhanden, das einen der jeweils festzulegenden Leitung oder Leitungen angepassten Aufnahmeraum bildet. So können für die Kabelverlegung in den Grundkörper Aufnahmeelemente eingesetzt werden, deren Aufnahmeraum jeweils dem Kabelbedarf angepasst ist, indem der Aufnahmeraum beispielsweise für die Aufnahme eines Einzelkabels, einer Zweier-Gruppe, einer DreierGruppe oder eines Blindstopfens geformt ist. In Verbindung mit der federunterstützten Klemmung der Leitungen, die aus der Vorspannung zwischen Aufnahmeelement und Anlagefläche des Deckteiles resultiert, ist dadurch für unterschiedliche Leitungs- oder Kabelbündel und ungeachtet etwaiger Durchmessertoleranzen, bündige, verspannungsfreie Anlage des Deckteils am Grundkörper sichergestellt.

Ein weiterer Vorteil besteht darin, dass gleichartige Grundkörper zur Befestigung unterschiedlicher Kabel oder -Bündel benutzbar sind. Durch Einsetzen jeweils bedarfsangepasster Aufnahmeelemente in den Grundkörper kann das Befestigungssystem kundenindividuell vorkonfektioniert werden.

Vorzugsweise weist der Grundkörper entlang einer Längsachse mehr als eine Leitungsdurchführung auf, wobei die Aufnahmeelemente eine sich entlang der Längsachse erstreckende Tragplatte aufweisen, deren dem Deckteil zugewandter Rand den Aufnahmeraum begrenzt. Dabei kann der Rand in der Tragplatte eine Vertiefung bilden, deren Formgebung und Tiefe dem jeweils aufzunehmenden Kabel oder Bündel angepasst ist.

Bei besonders vorteilhaften Ausführungsbeispielen weist der Grundkörper ein sich unterhalb der Leitungsdurchführungen erstreckendes Bodenteil auf, wobei zwischen diesem und den Aufnahmeelementen jeweils eine Druckfeder eingespannt ist, die die Aufnahmeelemente gegen das Deckteil hin vorspannt.

Hinsichtlich der Anordnung der Aufnahmeelemente im Grundkörper kann die Anordnung vorteilhafterweise so getroffen sein, dass die Aufnahmeelemente beidseits der Tragplatte Führungsleisten aufweisen, die in seitlich der Leitungsdurchführungen senkrecht zum Bodenteil im Grundkörper verlaufenden Führungsnuten bewegbar geführt sind.

Mit besonderem Vorteil kann hierbei in den Führungsnuten eine Vertiefung eine Arretierkante bilden, die in Zusammenwirken mit einer Rastnase der betreffenden Führungsleiste ein Herausbewegen des Aufnahmeelementes aus dem Grundkörper verhindert. Die verliersichere Anordnung der Aufnahmeelemente im Grundkörper erleichtert sowohl die Vorkonfektionierung als auch die Montage.

Bei einem vorteilhaften Ausführungsbeispiel bildet der Grundkörper seitlich der Leitungsdurchführungen Säulenkörper, die sich vom Bodenteil bis zur Öffnung der Leitungsdurchführungen erstrecken und an denen die Führungsnuten für die Führungsleisten der Aufnahmeelemente ausgebildet sind.

Dabei kann die Anordnung so getroffen sein, dass in den Säulenkörpern des Grundkörpers Durchgangsbohrungen vorhanden sind, denen zur Bildung der Verschraubung Bohrungen im Deckteil zugeordnet sind.

Für eine Anordnung in Etagenbauweise können am Bodenteil des Grundkörpers und an der der Anlagefläche entgegengesetzten Außenseite des Deckteiles Ausrichtmittel vorgesehen sein, die miteinander in Eingriff bringbar sind, so dass die betreffenden Einheiten bei der Montage auf einfache Weise miteinander fluchtend übereinander angeordnet werden können.

Bei besonders vorteilhaften Ausführungsbeispielen kann zusätzlich zu oder an Stelle der Federunterstützung der Aufnahmeelemente vom Bodenteil her eine Federunterstützung seitens des Deckteiles vorgesehen sein, indem die Anlageflächen am Deckteil durch bewegbare Druckkörper gebildet sind, die durch Federkraft in Richtung auf den Aufnahmeraum des zugeordneten, im Grundkörper befindlichen Aufnahmeelementes vorgespannt sind. Dadurch eröffnet sich die vorteilhafte Möglichkeit, größere Form- und/oder Abmessungstoleranzen der festzulegenden Kabel- oder Bündel zu kompensieren.

Nachstehend ist die Erfindung anhand von in der Zeichnung dargestellten Ausführungsbeispielen im Einzelnen erläutert. Es zeigen:
- Fig. 1: einen Längsschnitt eines Ausführungsbeispieles des Befestigungssystems;
- Fig. 2: eine gegenüber Fig. 1 in kleinerem Maßstab gezeichnete Vorderansicht lediglich des Grundkörpers des Ausführungsbeispieles;
- Fig. 3: eine perspektivische Schrägansicht lediglich des Deckteiles des Ausführungsbeispieles;
- Fig. 4A bis 4D: Vorderansichten von Aufnahmeelementen des Ausführungsbeispieles, die unterschiedlichen Kabelanwendungen angepasst sind;
- Fig. 5: eine vergrößert und abgebrochen gezeichnete, perspektivische Schrägansicht eines Teiles des Grundkörpers des Ausführungsbeispieles;
- Fig. 6: einen Teillängsschnitt des Grundkörpers von Fig. 5;
- Fig. 7: eine Vorderansicht, in der das Ausführungsbeispiel in Etagenbauweise dargestellt ist;
- Fig. 8: einen gegenüber Fig. 1 in größerem Maßstab und abgebrochen gezeichneten Längsschnitt eines abgewandelten Ausführungsbeispieles des Befestigungssystems;
- Fig. 9: eine gegenüber Fig. 8 vergrößert und abgebrochen gezeichnete Vorderansicht eines weiteren Ausführungsbeispiels und
- Fig. 10: eine demgegenüber weiter vergrößert und aufgeschnitten gezeichnete, perspektivische Schrägansicht eines Federgehäuses mit einem federbelasteten Druckkörper für das weitere Ausführungsbeispiel.

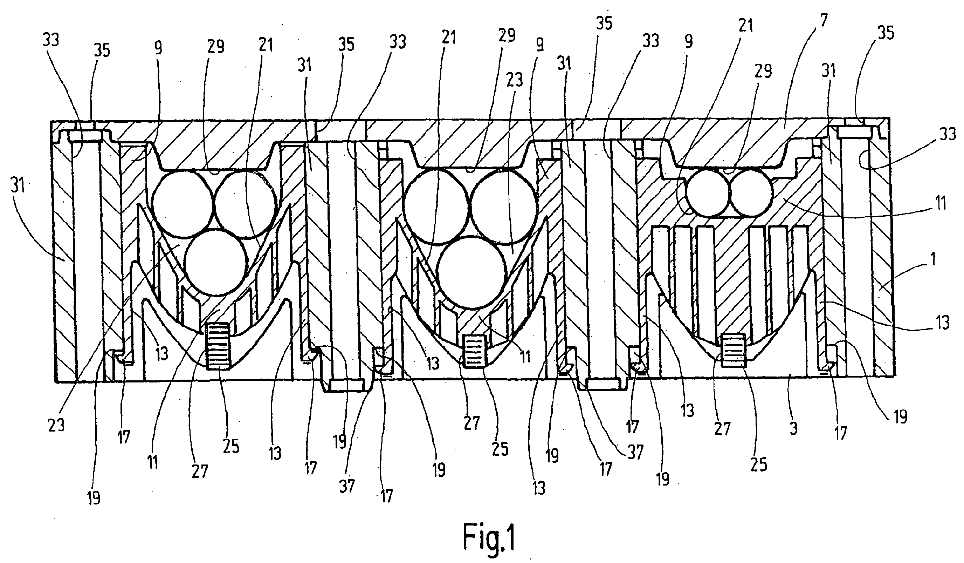

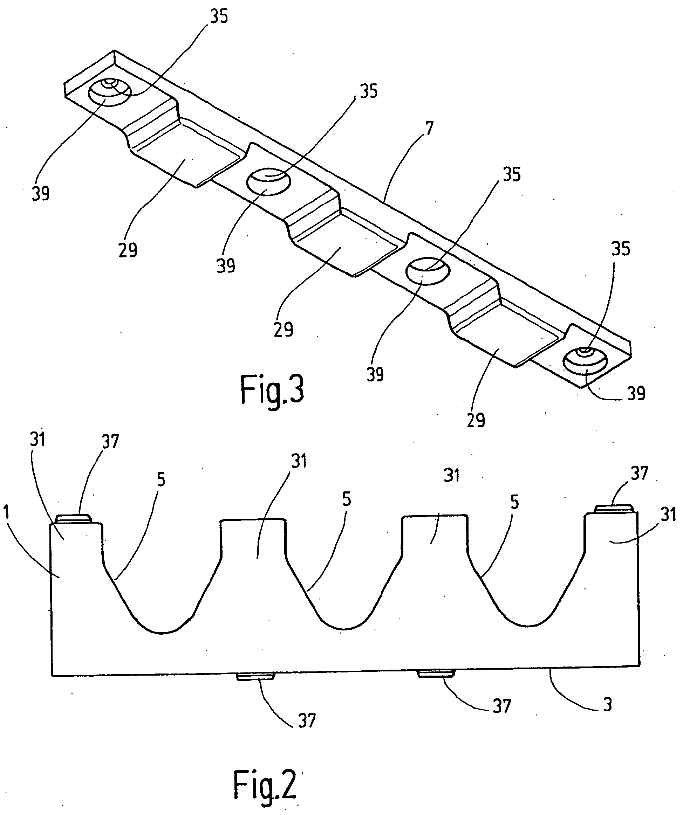

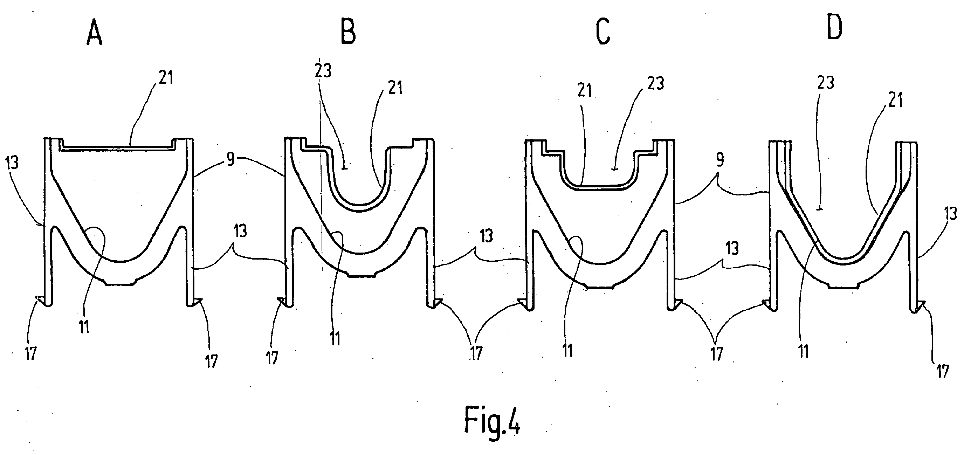

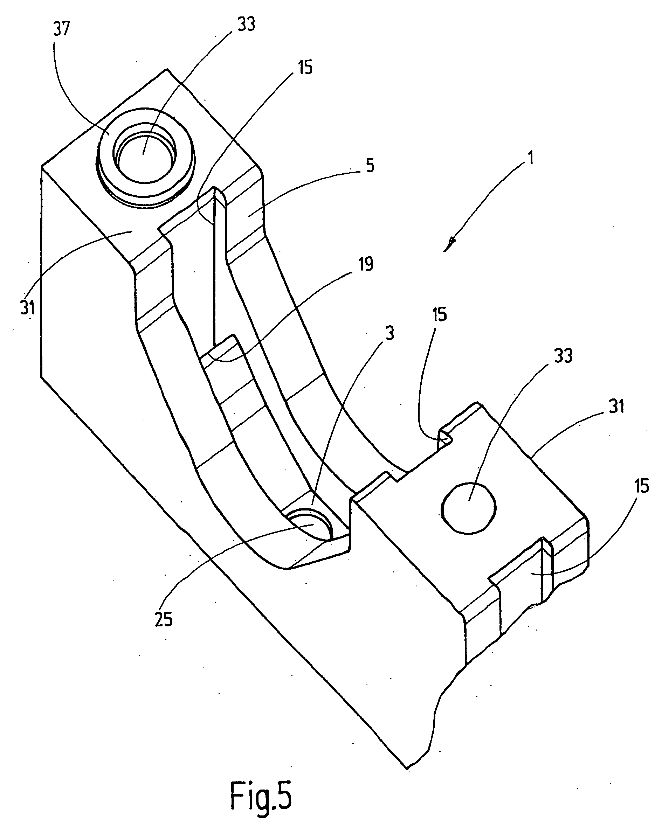

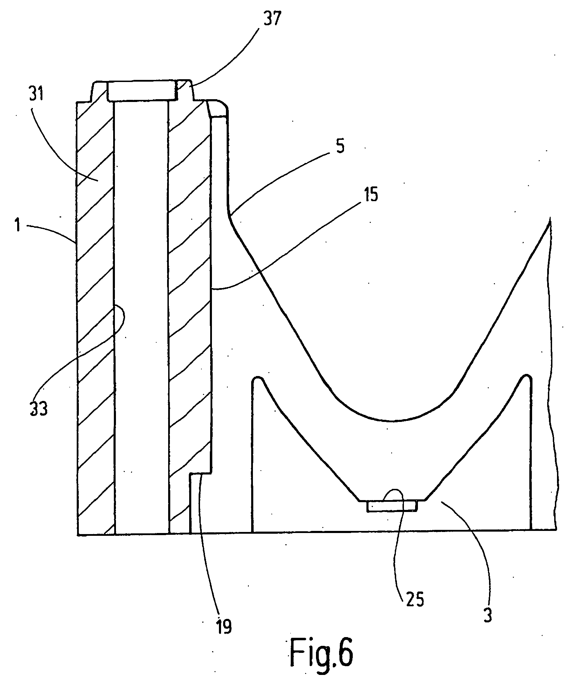

Anhand der Figuren 1 bis 7 ist nachstehend ein erstes Ausführungsbeispiel des Befestigungssystemes erläutert. Bei dem gezeigten Beispiel bildet ein Grundkörper 1, der in Fig. 2 gesondert dargestellt ist, einen leisten- oder balkenförmigen Körper, der an seiner Unterseite ein geschlossenes Bodenteil 3 sowie entlang der Längsachse des Grundkörpers 1 in regelmäßigen Abständen angeordnete Leitungsdurchführungen 5 bildet, die zu der dem Bodenteil 3 entgegengesetzten Oberseite hin offen sind. Beim gezeigten Ausführungsbeispiel sind drei Leitungsdurchführungen 5 vorgesehen. Die Fig. 3 zeigt in gesonderter Darstellung ein Deckteil 7, das als oberer Abschluss des Grundkörpers 1 mit diesem verschraubbar ist, wobei die Verschraubung in der Zeichnung nicht dargestellt ist. Die Leitungsdurchführungen 5 sind, wie am besten aus Figuren 5 und 6 ersichtlich ist, so geformt, dass jeweils ein Aufnahmeelement 9 in die jeweilige Leitungsdurchführung 5 einsetzbar ist. Die Figuren 4A bis 4D zeigen Beispiele von den jeweiligen Bedürfnissen angepassten Aufnahmeelementen 9, wobei Fig. 4A die Formgebung für einen Blindstopfen, Fig. 4B die Formgebung für ein Einzelkabel verhältnismäßigen großen Querschnittes, Fig. 4C die Formgebung für zwei Einzelkabel und Fig. 4D die Formgebung für ein Bündel aus drei Kabeln zeigen. Die Aufnahmeelemente 9 bilden zur Abstützung der jeweiligen Kabel eine sich entlang der Längsachse erstreckende Tragplatte 11, an die sich beidseits Führungsleisten 13 anschließen, die in Führungsnuten 15 einschiebbar sind, die, wie Figuren 5 und 6 zeigen, im Grundkörper 1 innerhalb der Leitungsdurchführungen 5 ausgebildet sind. Die Führungsleisten 13 weisen endseits Rastnasen 17 auf, die nach dem Einschieben in den Grundkörper 1 in Zusammenwirkung mit einer Arretierkante 19 in den Führungsnuten 15 (siehe insbesondere Fig. 6), ein Herausnehmen der Aufnahmeelemente 9 aus dem Grundkörper 1 erschweren, so dass die Aufnahmeelemente 9 verliersicher gehalten sind.

Wie den Figuren 4A bis 4D deutlich entnehmbar ist, bildet der obere, d. h. bei in den Grundkörper 1 eingesetztem Zustand der dem Deckteil 7 zugewandte Rand 21 der Tragplatte 11 der Aufnahmeelemente 9 die Begrenzung des jeweiligen Aufnahmeraumes 23 (Figuren 4B bis 4D), wobei in der Tragplatte 11 eine mehr oder weniger große oder tiefe Vertiefung gebildet ist, die bei dem Beispiel von Fig. 4D einen etwa V-förmigen Querschnitt für die Aufnahme eines Dreier-Bündels besitzt. Im Zentralbereich jeder Leitungsdurchführung 5 bildet der Grundkörper 1 am Bodenteil 3 einen Sitz 25 (Figuren 5 und 6) für eine Druckfeder 27, die sich an der Unterseite der Tragplatte 11 des betreffenden Aufnahmeelementes 9 abstützt, um dieses für eine Bewegung längs der Führungsnuten 15 gegen das Deckteil 7 hin vorzuspannen. Wie Fig. 1 zeigt, werden dadurch die im Aufnahmeraum 23 der Aufnahmeelemente 9 befindlichen Kabel gegen eine Anlagefläche 29 des mit dem Grundkörper 1 verschraubten Deckteiles 7 gespannt.

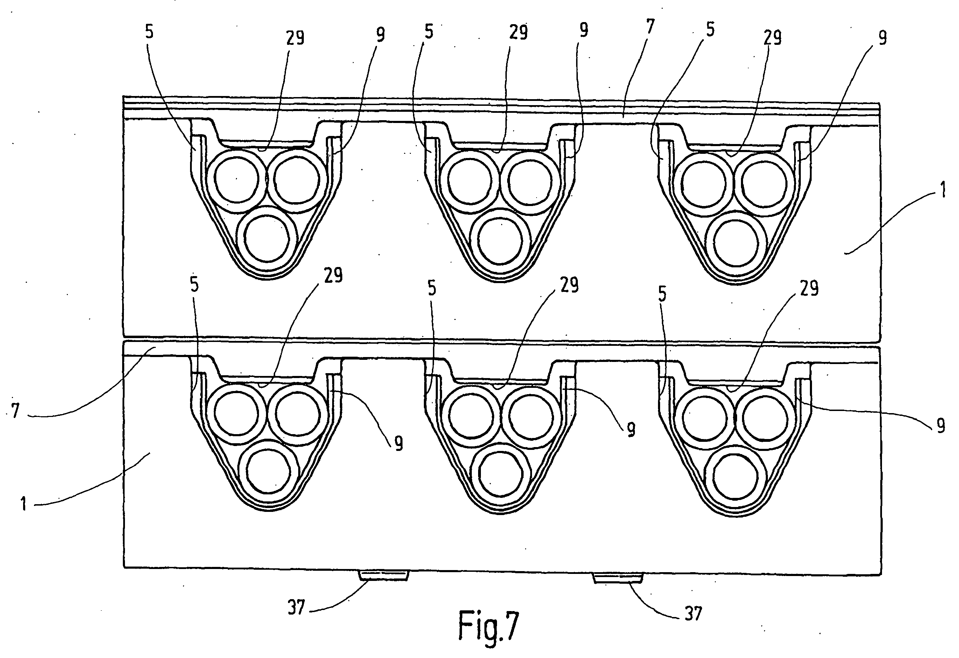

Für die Verschraubung von Deckteil 7 und Grundkörper 1 weist der Grundkörper 1 seitlich der Leitungsdurchführungen 5 Säulenkörper 31 auf, die an ihrer den Leitungsdurchführungen 5 zugewandten Seiten die Führungsnuten 15 bilden und Durchgangsbohrungen 33 enthalten, denen im Deckteil 7 zur Bildung der Verschraubung entsprechende Bohrungen 35 zugeordnet sind. Um bei der Montage, insbesondere bei einer Etagenbauweise, wie sie in Fig. 7 dargestellt ist, die genaue Fluchtung der Grundkörper 1 und Deckteile 7 zu gewährleisten, sind Ausrichtmittel vorgesehen. Beim gezeigten Beispiel handelt es sich hierbei um vorspringende Führungsdome 37, die am Grundkörper 1 konzentrisch zu Durchgangsbohrungen 33 vorspringen, sowie um am Deckteil 7 für die Dome 37 vorgesehene Aufnahmen, die durch Erweiterungen 39 der Bohrungen 35 des Deckteiles 7 gebildet sind.

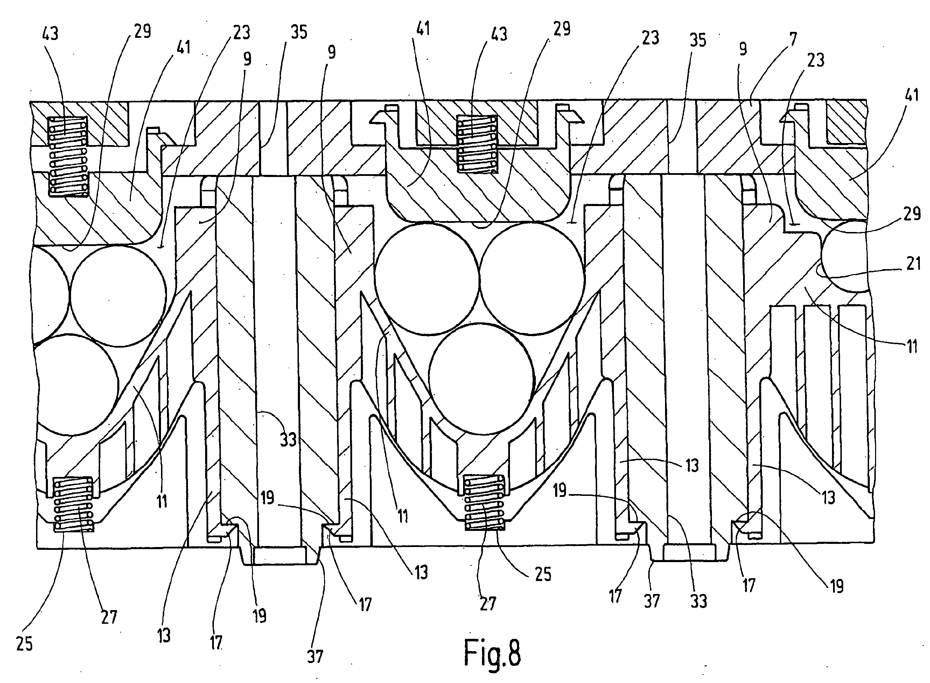

Das in Fig. 8 gezeigte, abgewandelte Ausführungsbeispiel unterscheidet sich vom ersten Ausführungsbeispiel lediglich durch eine andere Bauweise des Deckteiles 7. Anders als beim ersten Ausführungsbeispiel erfolgt die Festlegung der in den Leitungsdurchführungen 5 befindlichen Bauelemente nicht nur durch eine Federunterstützung vom Bodenteil 3 des Grundkörpers 1 her, sondern es ist auch eine Federunterstützung vom Deckteil 7 her vorgesehen. Hierfür sind am Deckteil 7 bewegbare Druckkörper 41 vorgesehen, die die Anlageflächen 29 bilden. Die Druckkörper 41 sind durch Druckfedern 43 für eine Bewegung gegen das Innere der Aufnahmeräume 23 der Leitungsdurchführungen 5 hin vorgespannt. Die Federunterstützung vom Deckteil 7 her könnte auch die Federunterstützung vom Bodenteil 3 her ersetzen.

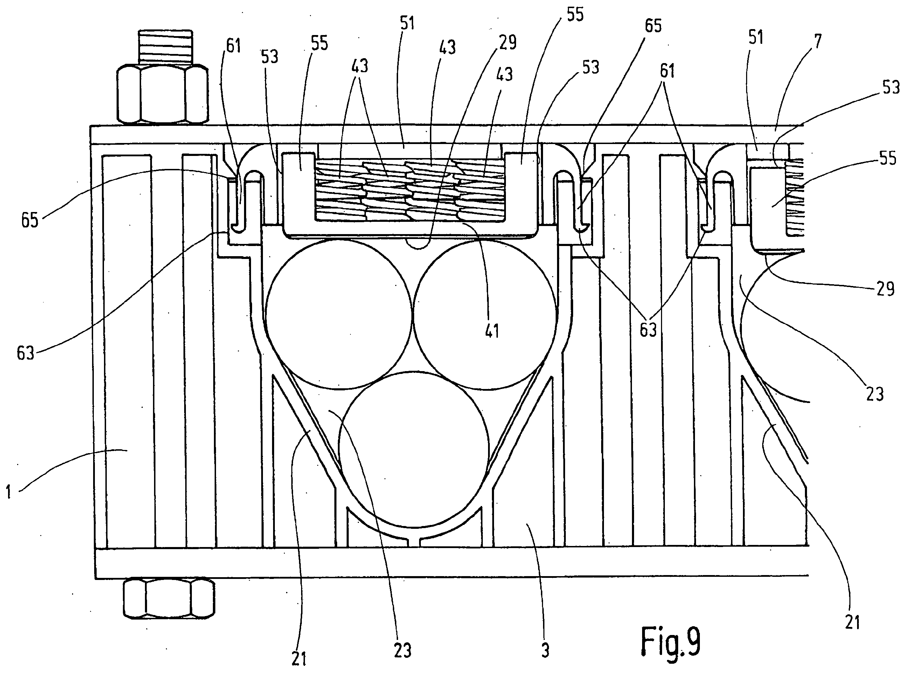

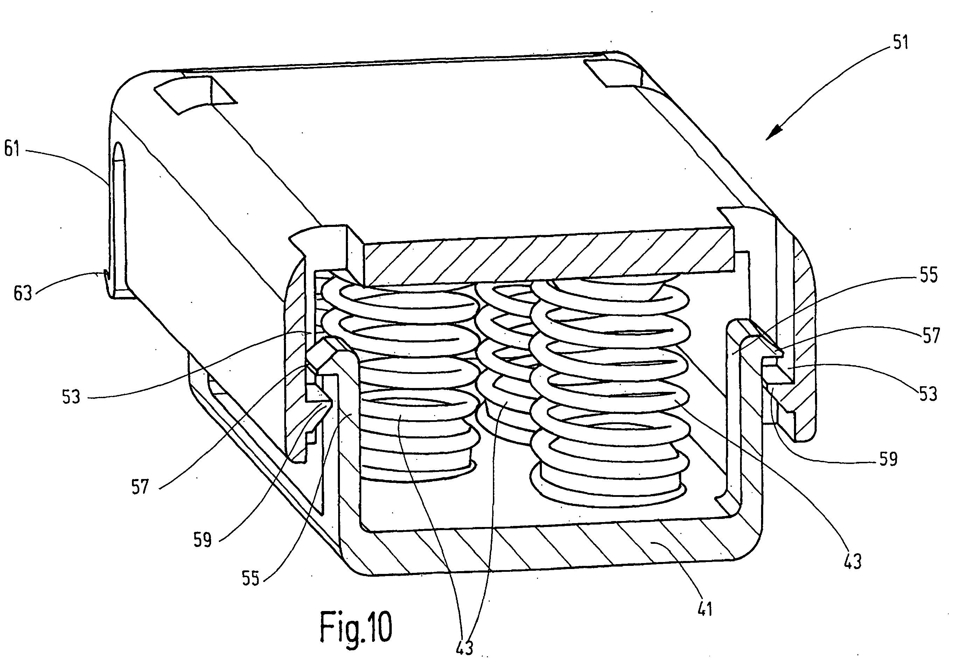

Letzteres ist bei dem in Fig. 9 und 10 gezeigten weiteren Ausführungsbeispiel der Fall, wo am Grundkörper 1 keine vom Bodenteil 3 her federbelasteten, bewegbaren Aufnahmeelemente 9 vorgesehen sind, sondern der Grundkörper 1 selbst die von den Rändern 21 begrenzten Aufnahmeräume 23 bildet. Als Ersatz für die fehlende Federwirkung vom Bodenteil 3 her ist beim Beispiel von Fig. 9 und 10 die vom oberen Deckteil 7 her wirkende Federkraft dadurch verstärkt, dass anstelle einer Einzelfeder 43 jeweils ein aus mehreren, nebeneinander angeordneten Druckfedern 43 gebildetes Federpaket vorhanden ist, das sich innerhalb eines in Fig. 10 als Ganzes mit 51 bezeichneten Federgehäuses befindet. Dieses weist Führungsbahnen 53 auf, in denen Führungsleisten 55, die sich in den Eckbereichen des Druckkörpers 41 ins Federgehäuse 51 erstrecken, für einen Hubweg geführt sind, der einem verhältnismäßigen langen Federweg entspricht, der, um den Austritt des gespannten Druckkörpers 41 aus dem Federgehäuse 51 zu verhindern, durch Anschlagnasen 57 und 59 begrenzt ist. Wie am deutlichsten aus Fig. 9 ersichtlich ist, befinden sich an den Eckbereichen des Federgehäuses 51 Sicherungsleisten 61 mit Rastnasen 63, die in Zusammenwirkung mit Rastnasen 65 am Grundkörper 1 die Federgehäuse 51 unverlierbar am Grundkörper 1 sichern und dadurch ermöglichen, dass bei noch nicht angebrachtem Deckteil 7 Kabel in die Aufnahmeräume 23 eingelegt werden können und, bevor das Deckteil eingebracht wird, durch Anbringen der Federgehäuse 51 vorläufig gegen Herausfallen gesichert werden können.

## Patentansprüche

1. Befestigungssystem für Leitungen, umfassend:
- einen an einer Tragstruktur festlegbaren Grundkörper (1), der an seiner Unterseite ein Bodenteil (3) und mindestens eine zu der dem Bodenteil (3) entgegengesetzten Oberseite hin offene Leitungsdurchführung (5) zur Ausbildung eines jeweiligen Aufnahmeraums (23) für eine oder mehrere Leitungen aufweist,
- ein Deckteil (7), das als oberer Abschluss des Grundkörpers (1) mit diesem verbindbar ist und durch welches die mindestens eine Leitungsdurchführung (5) an der Oberseite verschließbar ist,
- wobei mindestens eine Federanordnung (27, 43) vorgesehen ist, die jeweils eine Federkraft auf eine an mindestens einer Leitung im jeweiligen Aufnahmeraum (23) anliegende Anlagefläche (29) derart aufbringt, dass die eine oder mehrere Leitungen im jeweiligen Aufnahmeraum (23) unter Vorspannung fixierbar sind,
- wobei die jeweilige Federanordnung (27, 43) am Deckteil (7) und/oder am Bodenteil (3) angeordnet ist,
- **dadurch gekennzeichnet, dass** die jeweilige Anlagefläche (29) an einem bewegbaren Druckkörper (41) ausgebildet ist, der durch mindestens eine Druckfeder (43) in Richtung des Bodenteils (3) bzw. des Deckteils (7) zum jeweiligen Aufnahmeraum (23) hin vorgespannt ist.

2. Befestigungssystem nach Anspruch 1, **dadurch gekennzeichnet, dass** der jeweilige Druckkörper (41) jeweils in einem Federgehäuse (51) in einer einen begrenzten Federweg in Richtung auf den jeweiligen Aufnahmeraum (23) ermöglichenden Führung (53) bewegbar ist.

3. Befestigungssystem nach Anspruch 2, **dadurch gekennzeichnet, dass** der jeweilige Druckkörper (41) jeweils durch ein im Federgehäuse (51) befindliches, aus mehreren Druckfedern (43) gebildetes Federpaket vorgespannt ist.

4. Befestigungssystem nach einem der vorhergehenden Ansprüche, **dadurch gekennzeichnet, dass** in mindestens eine Leitungsdurchführung (5) ein Aufnahmeelement (9) einsetzbar ist, das einen der jeweils aufzunehmenden Leitung oder Leitungen angepassten Aufnahmeraum (23) bildet.

5. Befestigungssystem nach Anspruch 4, **dadurch gekennzeichnet, dass** das jeweilige Aufnahmeelement (9) im Grundkörper (1) bewegbar gelagert und durch die jeweilige Federkraft für eine Bewegung gegen das Deckteil (7) oder das Bodenteil (3) hin vorgespannt ist.

6. Befestigungssystem nach Anspruch 3 oder 5, **dadurch gekennzeichnet, dass** zwischen dem Bodenteil (3) oder dem Deckteil (7) und dem jeweiligen Aufnahmeelement (9) eine Druckfeder (25, 43) eingespannt ist, die das jeweilige Aufnahmeelement (9) gegen das Deckteil (7) bzw. das Bodenteil (3) hin vorspannt.

7. Befestigungssystem nach einem der Ansprüche 4 bis 6, **dadurch gekennzeichnet, dass** der Grundkörper (1) entlang einer Längsachse mehr als eine Leitungsdurchführung (5) bildet, und dass die Aufnahmeelemente (9) eine sich entlang der Längsachse erstreckende Tragplatte (11) aufweisen, deren dem Deckteil (7) zugewandter Rand (21) den jeweiligen Aufnahmeraum (23) begrenzt.

8. Befestigungssystem nach Anspruch 7, **dadurch gekennzeichnet, dass** die Aufnahmeelemente (9) beidseits der Tragplatte (11) Führungsleisten (13) aufweisen, die in seitlich der Leitungsdurchführungen (5) senkrecht zum Bodenteil (3) im Grundkörper (1) verlaufenden Führungsnuten (15) bewegbar geführt sind.

9. Befestigungssystem nach Anspruch 8, **dadurch gekennzeichnet, dass** in den Führungsnuten (15) jeweils eine Vertiefung eine Arretierkante (19) bildet, die in Zusammenwirkung mit einer Rastnase (17) der betreffenden Führungsleiste (13) ein Herausbewegen des jeweiligen Aufnahmeelementes (9) aus dem Grundkörper (1) verhindert.

10. Befestigungssystem nach Anspruch 8 oder 9, **dadurch gekennzeichnet, dass** der Grundkörper (1) seitlich der Leitungsdurchführungen (5) Säulenkörper (31) bildet, die sich vom Bodenteil (3) bis zur Öffnung der Leitungsdurchführungen (5) erstrecken und an denen die Führungsnuten (15) für die Führungsleisten (13) der Aufnahmeelemente (9) ausgebildet sind.

11. Befestigungssystem nach Anspruch 10, **dadurch gekennzeichnet, dass** in den Säulenkörpern (31) des Grundkörpers (1) Durchgangsbohrungen (33) vorhanden sind, in denen zur Bildung der Verschraubung Bohrungen (35) im Deckteil (7) zugeordnet sind.

12. Befestigungssystem nach einem der vorstehenden Ansprüche, **dadurch gekennzeichnet, dass** für eine Anordnung in Etagenbauweise am Bodenteil (3) des Grundkörpers (1) und an der dem Bodenteil (3) entgegengesetzten Außenseite des Deckteiles (7) Ausrichtmittel (37, 39), die miteinander in Eingriff bringbar sind, vorgesehen sind.

## Claims

1. An attachment system for lines, comprising:
- a base body (1) which can be secured to a support structure and which has on its lower side a bottom part (3) and at least one line feedthrough (5) open to the upper side opposite the bottom part (3) in order to form a respective receiving space (23) for one or more lines,
- a cover part (7) that can be connected to the base body (1) as an upper termination of the latter, and by means of which the at least one line feedthrough (5) can be closed on the upper side,
- at least one spring arrangement (27, 43) being provided that respectively applies a spring force to a contact surface (29) resting against at least one line in the respective receiving space (23) such that the one or more lines can be fixed with pretensioning in the respective receiving space (23),
- the respective spring arrangement (27, 43) being disposed on the cover part (7) and/or on the bottom part (3),
- **characterised in that** the respective contact surface (29) is formed on a moveable pressure body (41) that is pretensioned towards the respective receiving space (23) by at least one compression spring (43) in the direction of the bottom part (3) or of the cover part (7).

2. The attachment system according to Claim 1, **characterised in that** the respective pressure body (41) can respectively be moved in a spring housing (51) in a guide (53) which enables a limited spring path in the direction to the respective receiving space (23).

3. The attachment system according to Claim 2, **characterised in that** the respective pressure body (41) is respectively pretensioned by a spring assembly which is formed from several compression springs (43) and which is located in the spring housing (51).

4. The attachment system according to any of the preceding claims, **characterised in that** there can be inserted into at least one line feedthrough (5) a receiving element (9) which forms a receiving space (23) which is matched to the respective line or lines to accommodated.

5. The attachment system according to Claim 4, **characterised in that** the respective receiving element (9) is mounted moveably in the base body (1) and is pretensioned by the respective spring force for movement against the cover part (7) or the bottom part (3).

6. The attachment system according to Claim 3 or 5, **characterised in that** there is clamped between the bottom part (3) or the cover part (7) and the respective receiving element (9) a compression spring (25, 43) which pretensions the respective receiving element (9) against the cover part (7) or the bottom part (3).

7. The attachment system according to any of Claims 4 to 6, **characterised in that** the base body (1) along one longitudinal axis forms more than one line feedthrough (5), and that the receiving elements (9) have a support plate (11) which extends along the longitudinal axis and the edge (21) of which facing the cover part (7) borders the respective receiving space (23).

8. The attachment system according to Claim 7, **characterised in that** the receiving elements (9) on both sides of the support plate (11) have guide strips (13) which are moveably guided in guide grooves (15) which run laterally to the line feedthroughs (5) perpendicular to the bottom part (3) in the base body (1).

9. The attachment system according to Claim 8, **characterised in that** in the guide grooves (15) a depression respectively forms a locking edge (19) which, in interaction with a catch projection (17) of the respective guide strip (13), prevents the respective receiving element (9) from moving out of the base body (1).

10. The attachment system according to Claim 8 or 9, **characterised in that** the base body (1) laterally from the line feedthroughs (5) forms column bodies (31) which extend from the bottom part (3) to the opening of the line feedthroughs (5) and on which the guide grooves (15) are made for the guide strips (13) of the receiving elements (9).

11. The attachment system according to Claim 10, **characterised in that** in the column bodies (31) of the base body (1) there are through bores (33) to which bores (35) in the cover part (7) are assigned in order to form the screwed connection.

12. The attachment system according to any of the preceding claims, **characterised in that** for an arrangement in a tiered construction, on the bottom part (3) of the base body (1) and on the outer side of the cover part (7) opposite the bottom part (3) alignment means (37, 39) are provided which can be caused to engage with one another.

## Revendications

1. Système de fixation de lignes, comprenant :
- un corps (1) de base, qui peut être fixé à une structure porteuse et qui a, sur son côté inférieur, une partie (3) formant fond et au moins une traversée (5) de ligne ouverte vers le côté supérieur opposé à la partie (3) formant fond pour former un espace (23) respectif de réception d'une ligne ou de plusieurs lignes,
- une partie (7) formant couvercle, qui, en tant que fermeture supérieure du corps (1) de base, peut être reliée à celui-ci et par lequel la au moins une traversée (5) de ligne peut être fermée du côté supérieur,
- dans lequel il est prévu au moins un agencement (27, 43) de ressort, qui applique respectivement une force de ressort à une surface (29) d'application s'appliquant à au moins une ligne dans l'espace (23) de réception respectif, de manière à ce que la ligne ou les plusieurs lignes puissent être immobilisées sous précontrainte dans l'espace (23) de réception respectif,
- dans lequel l'agencement (27, 43) de ressort respectif est monté sur la partie (7) formant couvercle et/ou sur la partie (3) formant fond,
- **caractérisé en ce que** la surface (29) d'application respective est constituée sur un corps (41) mobile d'application d'une pression, qui, par au moins un ressort (43) de compression, est précontraint dans la direction de la partie (3) formant fond ou de la partie (7) formant couvercle, vers l'espace (23) de réception respectif.

2. Système de fixation suivant la revendication 1, **caractérisé en ce que** le corps (41) respectif d'application d'une pression est mobile respectivement dans un boîtier (51) de ressorts, dans un guidage (53) permettant une course de ressort limitée en direction de l'espace (23) de réception respectif.

3. Système de fixation suivant la revendication 2, **caractérisé en ce que** le corps (41) respectif d'application d'une pression est précontraint respectivement par un bloc ressorts se trouvant dans le boîtier (51) de ressorts et formé de plusieurs ressorts (43) de compression.

4. Système de fixation suivant l'une des revendications précédentes, **caractérisé en ce que**, dans au moins une traversée (5) de ligne, peut être inséré un élément (9) de réception, qui forme un espace (23) de réception adapté à la ligne ou aux lignes à recevoir.

5. Système de fixation suivant la revendication 4, **caractérisé en ce que** l'élément (9) respectif de réception est monté mobile dans le corps (1) de base et est, par la force de ressort respective, précontraint pour un déplacement vers la partie (7) formant couvercle ou vers la partie (3) formant fond.

6. Système de fixation suivant la revendication 3 ou 5, **caractérisé en ce que**, entre la partie (3) formant fond ou la partie (7) formant couvercle et l'élément (9) de réception respectif, est serré un ressort (25, 43) de compression, qui précontraint l'élément (9) de réception respectif vers la partie (7) formant couvercle ou vers la partie (3) formant fond.

7. Système de fixation suivant l'une des revendications 4 à 6, **caractérisé en ce que** le corps (1) de base forme, le long d'un axe longitudinal, plus d'une traversée (5) de ligne et **en ce que** les éléments (9) de réception ont une plaque (11) de support, qui s'étend suivant l'axe longitudinal et dont le bord (21) tourné vers la partie (7) formant fond délimite l'espace (23) respectif de réception.

8. Système de fixation suivant la revendication 7, **caractérisé en ce que** les éléments (9) de réception ont, de part et d'autre de la plaque (11) de support, des barrettes (13) de guidage, qui sont guidées de manière mobile dans des rainures (15) de guidage s'étendant dans le corps (1) de base latéralement aux traversées (5) de ligne perpendiculairement à la partie (3) formant fond.

9. Système de fixation suivant la revendication 8, **caractérisé en ce que**, dans les rainures (15) de guidage, une cavité forme respectivement une arête (19) d'arrêt, qui, en coopération avec un bec (17) d'encliquetage de la barrette (13) de guidage concernée, empêche l'élément (9) de réception respectif de sortir du corps (1) de base.

10. Système de fixation suivant la revendication 8 ou 9, **caractérisé en ce que** le corps (1) de base forme, latéralement aux traversées (5) de ligne, des colonnes (31), qui s'étendent de la partie (3) formant fond à l'ouverture des traversées (5) de ligne et sur lesquelles les rainures (15) de guidage des barrettes (13) de guidage des éléments (9) de réception sont formées.

11. Système de fixation suivant la revendication 10, **caractérisé en ce que**, dans les colonnes (31) du corps (1) de base, sont prévus des trous (33) de passage, des trous (35) dans la partie (7) formant couvercle étant associés pour former le vissage.

12. Système de fixation suivant l'une des revendications précédentes, **caractérisé en ce que**, pour un agencement en mode de construction étagée, il est prévu, sur la partie (3) formant fond du corps (1) de base et sur le côté extérieur, opposé à la partie (3) formant fond, de la partie (7) formant couvercle, des moyens (37, 39) d'orientation, qui peuvent être mis en prise l'un avec l'autre.
